# EUROPEAN PATENT APPLICATION

(11) **EP 2 239 810 A1**
(43) Date of publication of application: **13.10.2010**
(21) Application number: 09705397.9
(22) Date of filing: 15.01.2009
(51) Int. Cl.: H01M 10/46, H01M 2/10, H01M 2/20, H01M 10/44

(54) **BATTERY PACK AND SECONDARY BATTERY SYSTEM**

(30) Priority: 31.01.2008 JP 2008021473
(71) Applicant: Kabushiki Kaisha Toshiba, Minato-ku Tokyo 105-8001 (JP)
(72) Inventor: MIZUTANI, Mami, 1-1, Shibaura 1-chome, Minato-ku, Tokyo 105-8001 (JP); MORIKAWA, Ryuichi, 1-1, Shibaura 1-chome, Minato-ku, Tokyo 105-8001 (JP); MONDEN, Yukitaka, 1-1, Shibaura 1-chome, Minato-ku, Tokyo 105-8001 (JP); MOURI, Fumitaka, 1-1, Shibaura 1-chome, Minato-ku, Tokyo 105-8001 (JP); KAKUCHI, Takeo, 1-1, Shibaura 1-chome, Minato-ku, Tokyo 105-8001 (JP); NAKAHAMA, Takafumi, 1-1, Shibaura 1-chome, Minato-ku, Tokyo 105-8001 (JP)
(74) Representative: HOFFMANN EITLE
(86) International application number: PCT/JP2009/050426
(87) International publication number: WO 2009/096228

(57) **Abstract**

A battery pack is a battery pack chargeable a normal charge and a quick charge, and includes: a normal charging terminal 10 (11, 12) configured to apply a current of a first predetermined value to a battery cell; and a quick charging terminal 30 (31, 32) configured to apply to the battery cell a current of a second predetermined value exceeding the first predetermined value, the quick charging terminal having a different shape from a shape of the normal charging terminal.

## Description

### Technical Field

The present invention relates to a battery pack and a secondary battery system which allow normal charging and quick charging.

### Background Art

As a battery pack disclosed in JP-A 2004-6302, a battery pack is disclosed which is capable of preventing overcharging and over-discharging of a non-aqueous secondary battery.

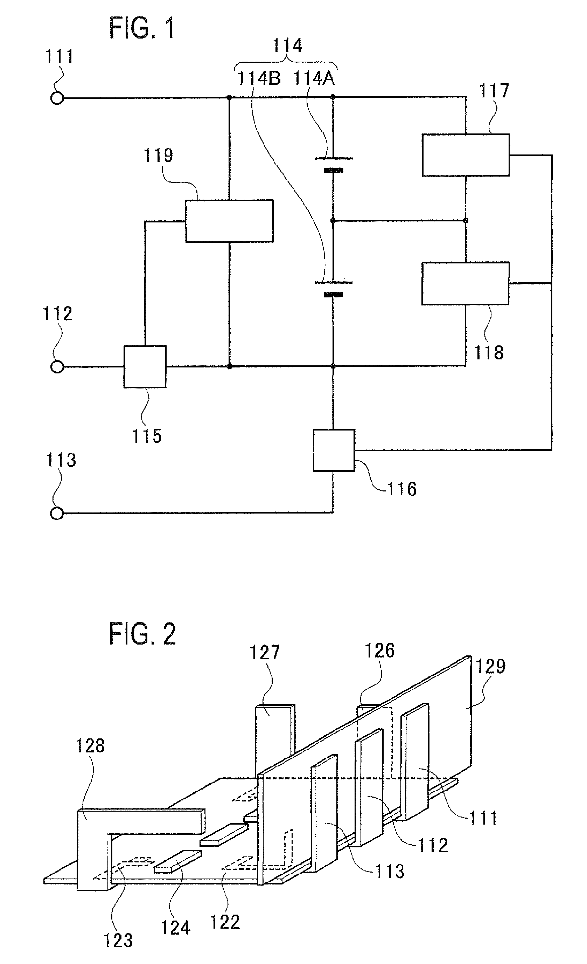

This battery pack internally includes an overcharging/over-discharging prevention circuit including voltage detectors 117 and 118 for detecting voltages of individual battery cells 114A and 114B, switching means 116, a voltage detector 119, and switching means 115, as shown in Fig. 1. During charging, the battery pack cuts off a charging current by turning off the switching means 116 based on an output from the voltage detector 117 or 118, when the voltage of the battery cell 114A or 114B exceeds a first predetermined value. During discharging, the battery pack cuts off a discharging current by turning off the switching means 115 based on an output from the voltage detector 119, when the voltage of the battery cell 114A or 114B becomes equal to or below a second predetermined value or when a total voltage of all the battery cells becomes equal to or below a third predetermined value.

Fig. 2 shows shapes of charging and discharging terminals in the above-described battery pack. In Fig. 2, a wiring pattern 123 is formed on a back face of a printed board 122 and circuit components 124 are mounted on a top surface of the printed board 122.

The printed board 122 is in a size large enough to dispose the two battery cells 114A and 114B in parallel. A positive electrode tab 126 and a negative electrode tab 127 are formed standing upright from one end of the board 122. The positive electrode tab 126 is connected to a positive terminal of the battery cell 114A which is one of the battery cells serially connected. The negative electrode tab 127 is connected to a negative terminal of the battery cell 114B which is the other one of the battery cells serially connected. A midpoint tab 128 is formed standing upright from the other end of the board 122, and is connected in common to a negative terminal of the battery cell 114A and a positive terminal of the other battery cell 114B. Moreover, a terminal fixation board 129 is provided standing upright on one side of the board 122 in an integrated manner. The outer side of terminal fixation board 129 is provided with a common terminal 111, a discharging terminal 112, and a charging terminal 113.

The common terminal 111, the discharging terminal 112, the charging terminal 113, the tabs 126, 127, and 128, and the like are connected to the wiring pattern 123 of the printed board 122. The circuit components 124 are mounted in the center of the board where a gap is formed between the two battery cells 114A and 114B when the battery cells 114A and 114B are arranged in parallel.

### Disclosure of the Invention

The above-described battery pack disclosed in JP-A 2004-6302 allows the reduction in the number of components because the battery pack is formed by having a common positive terminal for the charging terminal and the discharging terminal. However, this battery pack is not suitable for a battery pack for performing quick charging.

Specifically, in the normal charging, charging is made with a current one to less than three times of a rated current of the battery pack. On the other hand, in the quick charging, charging is made with a current four times or more of the current used in the normal charging and therefore is completed in a short period of time. However, there is a problem of damaging harnesses, pattern lines or the like if the current for the quick charging erroneously flows on a path for the normal charging.

An object of the present invention is to provide a battery pack and a secondary battery system which allow both of normal charging and quick charging while preventing damage attributable to overcharging.

The first invention of the present invention is a battery pack chargeable a normal charge and a quick charge. The battery pack includes: a normal charging terminal configured to apply a current of a first predetermined value to a battery cell; and a quick charging terminal configured to apply to the battery cell a current of a second predetermined value exceeding the current of the first predetermined value, the quick charging terminal having a shape different from a shape of the normal charging terminal.

The second invention is the battery pack according to the first invention which includes: a normal charge protection switching element provided between the normal charging terminal and the battery cell; and a quick charge protection switching element provided between the quick charging terminal and the battery cell.

A secondary battery system of the third invention includes: a normal charge charger configured to output a current of a first predetermined value; a quick charge charger configured to output a current of a second predetermined value exceeding the first predetermined value; and a battery pack, wherein the battery pack includes: a normal charging terminal configured to apply to a battery cell the current of the first predetermined value outputted from the normal charge charger; a normal charge protection switching element provided between the normal charging terminal and the battery cell; and a quick charging terminal configured to apply directly to the battery cell the current of the second predetermined value outputted from the quick charge charger, the quick charging terminal having a shape different from a shape of the normal charging terminal, and the quick charge charger includes a quick charge protection switching element provided at a stage preceding to an output terminal which outputs the current of the second predetermined value.

The fourth invention is the secondary battery system according to the third invention which includes: a communication line which allows the quick charge charger and the battery pack to transmit and receive information therebetween, wherein the quick charge charger controls whether or not to output the current of the second predetermined value based on the information transmitted from the battery pack.

The fifth invention is the secondary battery system according to the fourth invention, which includes: a communication line which allows the quick charge charger and the battery pack to transmit and receive information therebetween, wherein the normal charge charger controls whether or not to output the current of the first predetermined value based on the information transmitted from the battery pack.

According to the present invention, it is possible to provide a battery pack and a secondary battery system which allow both of normal charging and quick charging while preventing damage attributable to overcharging.

Specifically, according to the first invention, the shape of the normal charging terminal is different from the shape of the quick charging terminal. Therefore, it is not possible to connect a normal charger plug of a quick charge charger to the normal charging terminal. As a result, it is possible to separate a path for quick charging from a path for normal charging, the path for quick charging extending from the quick charge charger to a battery cell, the path for normal charging extending from a normal charge charger to the battery cell. Accordingly, a large current at the time of the quick charging does not flow on the path for the normal charging. It is thus possible to prevent damage on a harness, a pattern line or the like of the battery pack.

The second invention makes it possible to optimize losses caused in the normal charge protection switching element and the quick charge protection switching element each located in the course of the path. Moreover, since a large current at the time of the quick charging does not flow on the path for the normal charging, it is possible to prevent damage on a harness, a pattern line, or the normal charge protection switching element of the battery pack.

According to the third invention, the quick charge charger includes the quick charge switching element and the quick charge charger performs state estimation and protection of the battery pack. Hence it is possible to reduce the size and weight of the battery pack.

According to the fourth invention, the quick charge charger estimates the state of the battery pack based on the information transmitted from the battery pack via the communication line. Hence it is possible to reduce the size and weight of the battery pack.

According to the fifth invention, the normal charge charger can determine whether or not to output the current based on the information transmitted from the battery pack via the communication line. Hence it is possible to determine a protection mode and a protection level corresponding to the type of the charger.

### Brief Description of the Drawings

[Fig. 1] Fig. 1 is a block diagram showing a circuit configuration of a conventional battery pack.
[Fig. 2] Fig. 2 is a view showing shapes of charging and discharging terminals of the battery pack shown in Fig. 1.
[Fig. 3] Fig. 3 is a view schematically showing an electrical circuit of a battery pack according to Embodiment 1 of the present invention.
[Fig. 4] Fig. 4 is a perspective view schematically showing a structure of the battery pack according to Embodiment 1 of the present invention.
[Fig. 5] Fig. 5 is a view schematically showing an electrical circuit of a battery pack according to Embodiment 2 of the present invention.
[Fig. 6] Fig. 6 is a view schematically showing a secondary battery system according to Embodiment 3 of the present invention.
[Fig. 7] Fig. 7 is a view schematically showing a secondary battery system according to Embodiment 4 of the present invention.
[Fig. 8] Fig. 8 is a perspective view schematically showing a structure of a battery pack used in the secondary battery system according to Embodiment 4 of the present invention.
[Fig. 9] Fig. 9 is a view schematically showing a secondary battery system according to Embodiment 5 of the present invention.
[Fig. 10] Fig. 10 is a perspective view schematically showing a structure of a battery pack used in the secondary battery system according to Embodiment 5 of the present invention.

### Best Modes for Carrying Out the Invention

Embodiments of the present invention will be described below in detail with reference to the accompanying drawings.

### (Embodiment 1)

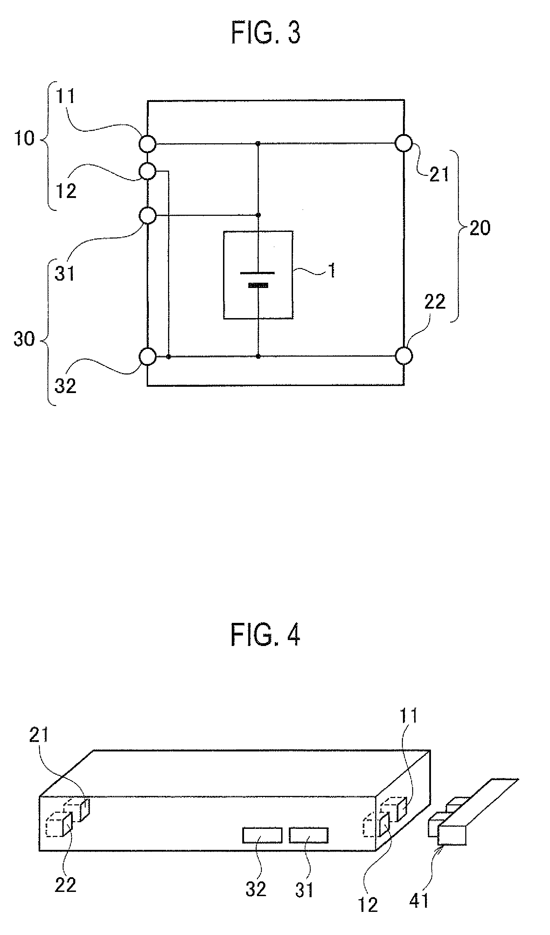

Fig. 3 is a view schematically showing an electrical circuit of a battery pack according to Embodiment 1 of the present invention. This battery pack includes a battery cell 1, a normal charging terminal 10, a discharging terminal 20, and a quick charging terminal 30.

The normal charging terminal 10 includes a normal charging positive terminal 11 and a normal charging negative terminal 12. The normal charging positive terminal 11 is connected to a positive electrode of the battery cell 1 and the normal charging negative terminal 12 is connected to a negative electrode of the battery cell 1. A current one to less than three times of a rated current of the battery pack is supplied from an unillustrated normal charge charger to this normal charging terminal 10.

The discharging terminal 20 includes a discharging positive terminal 21 and a discharging negative terminal 22. The discharging positive terminal 21 is connected to the positive electrode of the battery cell 1 and the discharging negative terminal 22 is connected to the negative electrode of the battery cell 1.

The quick charging terminal 30 includes a quick charging positive terminal 31 and a quick charging negative terminal 32. The quick charging positive terminal 31 is connected to the positive electrode of the battery cell 1 and the quick charging negative terminal 32 is connected to the negative electrode of the battery cell 1. A current four times or more of the current at the time of the normal charging is supplied from an unillustrated quick charge charger to this quick charging terminal 30.

According to the configuration described above, the normal charging positive terminal 11, the discharging positive terminal 21, and the quick charging positive terminal 31 are connected to one another. Meanwhile, the normal charging negative terminal 12, the discharging negative terminal 22, and the quick charging negative terminal 32 are connected to one another.

Fig. 4 is a perspective view schematically showing a structure of the battery pack according to Embodiment 1 of the present invention. This battery pack is formed into a cube and has the normal charging positive terminal 11 and the normal charging negative terminal 12 formed on one side surface. The discharging positive terminal 21 and the discharging negative terminal 22 are formed on another side surface opposite from the one side surface. Moreover, the quick charging positive terminal 31 and the quick charging negative terminal 32 are formed on still another side surface.

Each of the normal charging positive terminal 11 and the normal charging negative terminal 12 has a shape which allows only a normal charger plug 41 of the normal charge charger (illustration is omitted) to be inserted. A quick charger plug of the quick charge charger (illustration of these constituents is omitted) is not allowed to be inserted thereto. Similarly, each of the quick charging positive terminal 31 and the quick charging negative terminal 32 has a shape which allows only the quick charger plug to be inserted. The normal charger plug 41 is not allowed to be inserted thereto.

In the battery pack according to Embodiment 1 of the present invention configured as described above, at the performance of normal charging, the charging is made by connecting the normal charger plug 41 of the normal charge charger to the normal charging terminal 10 (the normal charging positive terminal 11 and the normal charging negative terminal 12). Similarly, at the performance of quick charging, the charging is made by connecting the quick charger plug of the quick charge charger to the quick charging terminal 30 (the quick charging positive terminal 31 and the quick charging negative terminal 32). In this case, the charging is made in a shorter time period than the normal charging is.

As described above, according to the battery pack of Embodiment 1 of the present invention, the shape of the normal charging terminal 10 is different from the shape of the quick charging terminal 30. Hence it is not possible to connect the quick charger plug of the quick charge charger to the normal charging terminal 10.

Therefore, a path for quick charging which extends from the quick charge charger to the battery cell 1 can be separated from a path for normal charging which extends from the normal charge charger to the battery cell 1. Accordingly, a large current at the time of the quick charging does not flow on the path for the normal charging. Thereby it is possible to prevent damage on a harness, a pattern line or the like, the damage including abnormal heat generation and burnout, for example.

### (Embodiment 2)

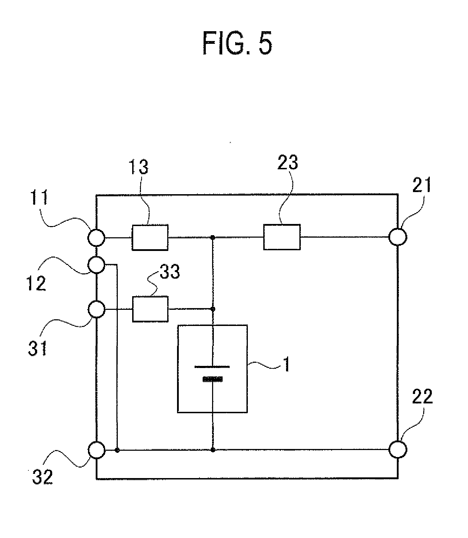

Fig. 5 is a view schematically showing an electrical circuit of a battery pack according to Embodiment 2 of the present invention. This battery pack is made: by additionally providing to the battery pack according to Embodiment 1 a normal charge protection switching element 13 between the normal charging positive terminal 11 and the positive electrode of the battery cell 1; by additionally providing thereto a discharge protection switching element 23 between the discharging positive terminal 21 and the positive electrode of the battery cell 1; and by additionally providing thereto a quick charge protection switching element 33 between the quick charging positive terminal 31 and the positive electrode of the battery cell 1.

During the normal charging, the normal charge protection switching element 13 is controlled by an unillustrated control circuit so as to be turned off when overcharging is detected and to be kept on while the overcharging is not detected. The discharge protection switching element 23 is controlled by an unillustrated control circuit so as to be turned off when overcharging is detected and to be kept on while the overcharging is not detected.

During the quick charging, the quick charge protection switching element 33 is controlled by an unillustrated control circuit so as to be turned off when overcharging is detected and to be kept on while the overcharging is not detected. This quick charge protection switching element 33 controls on and off of a large current and is therefore formed of a larger element than the normal charge protection switching element 13.

As described above, according to the battery pack of Embodiment 2 of the present invention, the shape of the normal discharging terminal 10 is different from the shape of the quick discharging terminal 30. Hence it is not possible to connect the quick charger plug of the quick charge charger to the normal charging terminal 10. Therefore, a path for quick charging which extends from the quick charge charger to the battery cell 1 can be separated from a path for normal charging which extends from the normal charge charger to the battery cell 1.

Accordingly, it is possible to obtain the effect of the battery pack of Embodiment 1 and to optimize losses caused in the normal charge protection switching element 13 and the quick charge protection switching element 33 located in the course of the paths. Moreover, since a large current at the time of the quick charging does not flow on the path for the normal charging, it is possible to prevent damage on a harness, a pattern line, or the normal charge protection switching element 13, the damage including abnormal heat generation and burnout, for example.

### (Embodiment 3)

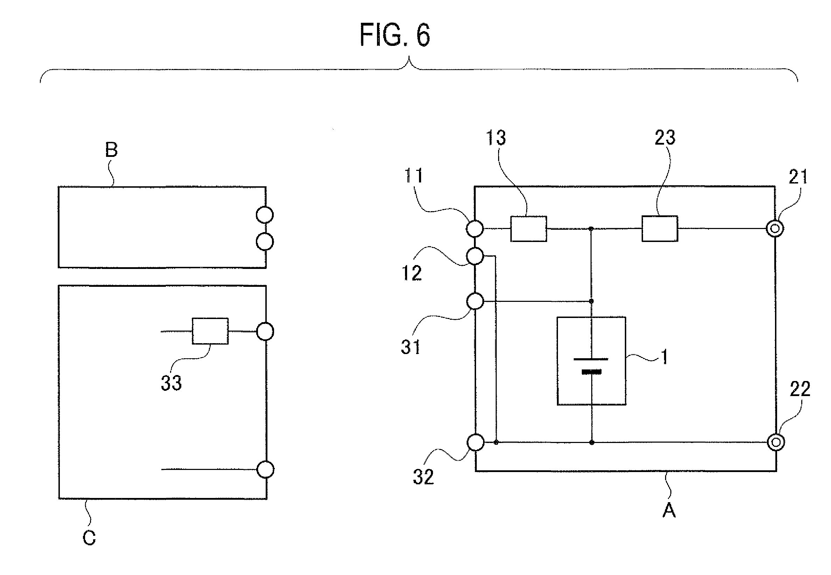

Fig. 6 is a view schematically showing a secondary battery system according to Embodiment 3 of the present invention. This secondary battery system includes a battery pack A, a normal charge charger B, and a quick charge charger C. This secondary battery system is formed by moving the quick charge switching element 33 of the battery pack according to Embodiment 2 to the quick charge charger C.

The quick charge charger C estimates a state of the battery pack A and turns off the quick charge switching element 33 when estimating that the battery pack A is to be overcharged. In this way, the battery pack A is protected from being overcharged.

As described above, according to the secondary battery system of Embodiment 3 of the present invention, the quick charge charger C includes the quick charge switching element 33 and the quick charge charger C performs state estimation and protection of the battery pack A. For this reason, it is possible to obtain a similar effect to that of the battery pack of Embodiment 2 and to reduce the size and weight of the battery pack A, thereby facilitating application of the secondary battery system of Embodiment 3 of the present invention to a mobile object or a mobile device, for example.

### (Embodiment 4)

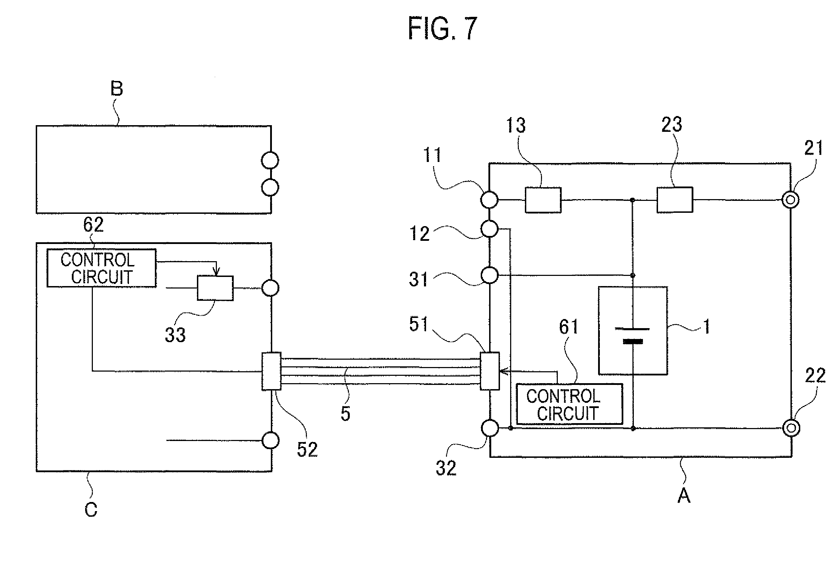

Fig. 7 is a view schematically showing a secondary battery system according to Embodiment 4 of the present invention. This cell system is obtained by additionally providing to the secondary battery system according to Embodiment 3 a communication cable 5 (corresponding to a communication line of the present invention) configured to connect the battery pack A to the quick charge charger C. In addition, a control circuit 61 is added to the battery pack A and a control circuit 62 is added to the quick charge charger C. The communication cable 5 is connected between a communication connector (cell side) 51 provided on the battery pack A and a communication connector (charger side) 52 provided on the quick charge charger C.

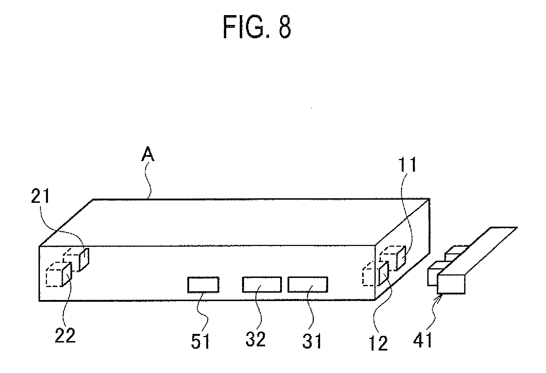

Fig. 8 is a perspective view schematically showing a structure of the battery pack according to Embodiment 4 of the present invention. In this battery pack, the communication connector (cell side) 51 is provided, additionally to the battery pack according to Embodiment 1, on the surface on which the quick charging positive terminal 31 and the quick charging negative terminal 32 are formed.

The control circuit 61 provided in the battery pack A detects a voltage, a current, and a temperature of the battery cell 1 and transmits the detected values as cell information to the quick charge charger C via the communication cable 5.

The control circuit 62 provided in the quick charge charger C estimates the state of the battery pack A based on the cell information transmitted from the battery pack A via the communication cable 5 and turns off the quick charge protection switching element 33 when estimating that the battery pack A is to be overcharged. In this way, the battery pack A is protected from being overcharged.

As described above, according to the secondary battery system of Embodiment 4 of the present invention, the state of the battery pack A is estimated by the quick charge charger C based on the cell information transmitted from the battery pack A via the communication cable 5. Therefore, as in the case of the secondary battery system according to Embodiment 3, the secondary battery system of Embodiment 4 of the present invention allows reduction in size and weight of the battery pack A, thereby facilitating application of the secondary battery system of Embodiment 4 of the present invention to a mobile object or a mobile device, for example.

### (Embodiment 5)

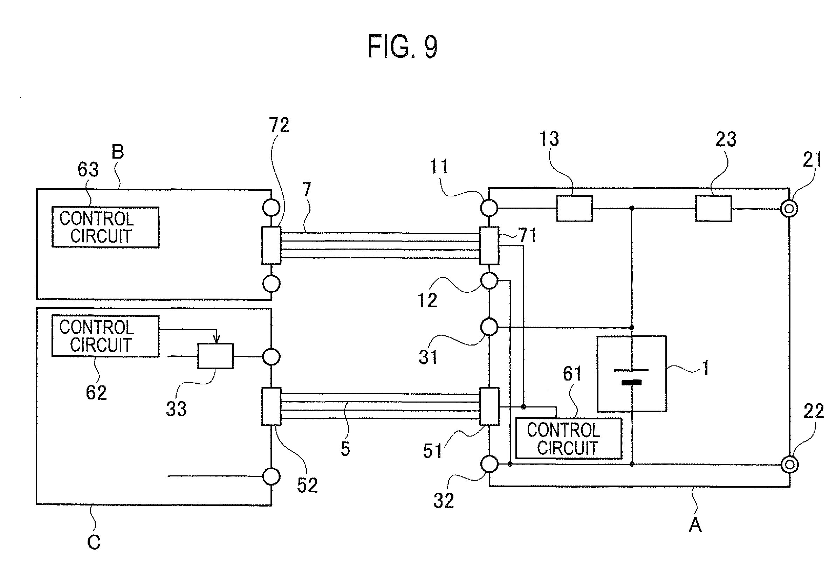

Fig. 9 is a view schematically showing a secondary battery system according to Embodiment 5 of the present invention. This cell system is configured by additionally providing to the secondary battery system according to Embodiment 4 a communication cable 7 (corresponding to a communication line of the present invention) for connecting the battery pack A to the normal charge charger B, and by additionally providing a control circuit 63 to the normal charge charger B. The communication cable 7 is connected between a communication connector (cell side) 71 provided on the battery pack A and a communication connector (charger side) 72 provided on the normal charge charger B.

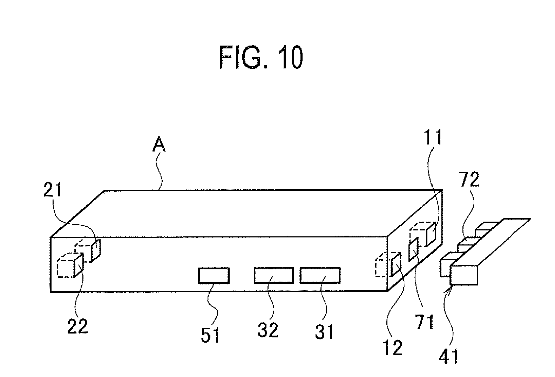

Fig. 10 is a perspective view schematically showing a structure of the battery pack according to Embodiment 5 of the present invention. This battery pack is configured by additionally providing to the battery pack according to Embodiment 4 the communication connector (cell side) 71 on the surface on which the normal charging positive terminal 11 and the normal charging negative terminal 12 are provided.

The control circuit 61 provided on the battery pack A detects the voltage, the current, and the temperature of the battery cell 1 and transmits the detected values as the cell information to the quick charge charger C via the communication cable 5 as well as to the normal charge charger B via the communication cable 7.

The control circuit 62 provided on the quick charge charger C determines whether or not to output a charging current to the battery pack A based on the cell information transmitted from the battery pack A via the communication cable 5. Then, the quick charge charger C turns off the quick charge protection switching element 33 when the charging current is not outputted. On the other hand, when outputting the charging current, the quick charge charger C estimates the state of the battery pack A. The quick charge charger C turns off the quick charge protection switching element 33 when estimating that the battery pack A is to be overcharged. In this way, the battery pack A is protected from being overcharged.

The control circuit 63 provided on the normal charge charger B determines whether or not to output a charging current to the battery pack A based on the cell information transmitted from the battery pack A via the communication cable 7.

As described above, according to the secondary battery system of Embodiment 5 of the present invention, the normal charge charger B can determine whether or not to output the current on the basis of the cell information transmitted from the battery pack A via the communication cable 7. Therefore, it is possible to obtain the effect of the secondary battery system according to Embodiment 4 and to determine a protection mode and a protection level corresponding to the type of the charger.

### Industrial Applicability

The secondary battery system according to the present invention is applicable to a power source of a load required to effectively use a remaining amount of energy of a secondary battery.

## Claims

1. A battery pack chargeable a normal charge and a quick charge, comprising:
a normal charging terminal configured to apply a current of a first predetermined value to a battery cell; and
a quick charging terminal configured to apply to the battery cell a current of a second predetermined value exceeding the current of the first predetermined value, the quick charging terminal having a shape different from a shape of the normal charging terminal.

2. The battery pack according to claim 1, comprising:
a normal charge protection switching element provided between the normal charging terminal and the battery cell; and
a quick charge protection switching element provided between the quick charging terminal and the battery cell.

3. A secondary battery system comprising:
a normal charge charger configured to output a current of a first predetermined value;
a quick charge charger configured to output a current of a second predetermined value exceeding the first predetermined value; and
a battery pack,
wherein the battery pack includes:
a normal charging terminal configured to apply to a battery cell the current of the first predetermined value outputted from the normal charge charger;
a normal charge protection switching element provided between the normal charging terminal and the battery cell; and
a quick charging terminal configured to apply directly to the battery cell the current of the second predetermined value outputted from the quick charge charger, the quick charging terminal having a shape different from a shape of the normal charging terminal, and
the quick charge charger includes a quick charge protection switching element provided at a stage preceding an output terminal which outputs the current of the second predetermined value.

4. The secondary battery system according to claim 3, comprising:
a communication line which allows the quick charge charger and the battery pack to transmit and receive information therebetween,
wherein the quick charge charger controls whether or not to output the current of the second predetermined value based on the information transmitted from the battery pack.

5. The secondary battery system according to claim 4, comprising:
a communication line which allows the quick charge charger and the battery pack to transmit and receive information therebetween,
wherein the normal charge charger controls whether or not to output the current of the first predetermined value based on the information transmitted from the battery pack.
